# EUROPEAN PATENT APPLICATION

(11) **EP 3 342 513 A1**
(43) Date of publication of application: **04.07.2018**
(21) Application number: 16207158.3
(22) Date of filing: 28.12.2016
(51) Int. Cl.: B23B 41/02

(54) **COOLANT DELIVERY SYSTEM FOR A DEEP HOLE DRILLING APPARATUS, DEEP HOLE DRILLING APPARATUS AND A METHOD OF DEEP HOLE DRILLING**

(71) Applicant: Sandvik Intellectual Property AB, 811 81 Sandviken (SE)
(72) Inventor: GRIFFITHS, Mark, Halesowen, B63 4QL (GB); TROMANS, Ian, Caunsall, Kidderminster, Worcestershire . (GB); MASON, Wayne, Stourbridge, Worcestershire DY9 OWD (GB)
(74) Representative: Sandvik

(57) **Abstract**

A displacement-based coolant delivery system (101) for a deep hole drilling apparatus, in which a drilling tube (104) is configured to supply coolant around a drill head (106) such that a volumetric flow rate of coolant can be selected to enable sufficient chip evacuation for effective cutting. The drilling tube (104) comprises a first internal passage for conveying coolant to a coolant flow path around the drill head, a second internal passage for conveying coolant and chips away from the drill head, and a ring element (108) mounted at the distal end of the drilling tube (104) and extending radially outward from the drill axis, wherein the ring element is arranged to fit within a drill hole formed by the drill head to inhibit coolant from flowing back over an outer surface of the drilling tube, thereby to define a preferential coolant flow path towards the second internal passage.

## Description

### FIELD OF THE INVENTION

The invention relates to coolant delivery system for deep hole drilling, i.e. for machining a hole having a depth of more than four times its diameter in a workpiece of metal or the like. In particular, the invention relates to a coolant delivery technique suitable for use with a range of machining centres to enable such machining centres to provide deep hole drilling capability.

### BACKGROUND TO THE INVENTION

Conventional deep hole drilling techniques comprise a supply of liquid coolant delivered to a drill head as a means of regulating the temperature at the drill head and as a chip removal medium.

One example of a conventional deep hole drilling technique utilises a configuration known as an ejector system, which is also sometimes referred to as a twin tube system. In the ejector system, a drill head is connected to a coolant conveying tube that comprises an inner tube and an outer tube mounted coaxially with respect to the inner tube. Coolant is supplied from an input port formed on an outer surface of the outer tube into an annular passageway located between the inner tube and outer tube. The annular passageway is used to deliver coolant to the drill head. The drill head has a central exhaust passage for evacuating coolant and chips though the inner tube.

The ejector system uses a venturi effect to create a pressure differential between the annular passageway and inner tube that acts to draw the coolant and chips away from the cutting surface through the centre of the inner tube. To achieve this effect, a series of notches are formed in the surface of the inner tube at the coolant input port. The notches are configured to create the pressure differential as coolant flows past them.

In practice, the "pull" of the pressure differential has limited reach, which means that drills using the ejector system cannot drill to depths of more than 5 m. Moreover, to establish the pressure differential high coolant flow rates (e.g. 150 l/min or more) are needed. Such high flow rates are typically much higher than those available on non-specialist machine centres, such as multi-functional machine tools. Accordingly, a problem of the ejector system is that it cannot be provided as a functional option on a multi-functional machine tool.

### SUMMARY OF THE INVENTION

At its most general, invention provides a displacement-based coolant delivery system, in which a drilling tube is configured to supply coolant around a drill head such that a volumetric flow rate (e.g. in litres per minute or similar units) of coolant through the system can be selected to enable sufficient chip evacuation for effective cutting. The coolant delivery system of the invention may be available for use on a range of conventional machining centres to enable such machining centres to provide deep hole drilling capability without requiring any special adaptations that would be necessary if conventional coolant delivery techniques were required.

According to the invention, there is provided a coolant delivery system for a deep hole drilling machine, the coolant delivery system comprising: a drilling tube lying on a drill axis and having a distal end connectable to a drill head, the drilling tube comprising: a first internal passage for conveying coolant to the drill head; and a second internal passage for conveying coolant and chips away from the drill head; a ring element mounted at the distal end of the drilling tube and extending radially outward from the drill axis; and a coolant outlet located on a distal side of the ring element, the coolant outlet being in fluid communication with the first internal passage to establish a coolant flow path around the drill head, wherein the ring element is arranged to fit within a drill hole formed by the drill head to inhibit coolant from flowing back over an outer surface of the drilling tube, thereby to define a preferential coolant flow path towards the second internal passage.

By defining the preferential coolant flow path in this manner, the coolant delivery system can operate to evacuate chips based on appropriate selection of a volumetric flow rate of coolant. A coolant flow rate may be selected based on known information about the chips that are created as the drill hole is formed. For example, the size and shape of chips may depend on the material of a workpiece in which the drill hole is formed, and drilling operational parameters such as drill speed and feed rate. The inventors have found that the coolant delivery system of the invention can effectively evacuate chips in a variety of workpiece materials at flow rates that are readily available on conventional drilling machines.

The ring element may comprise a bushing arranged to engage an inner surface of a drill hole formed by the drill head. The bushing may be an annular piece of wear-resistant material that is mounted on, e.g. secured to, a distal end of the drilling tube. The bushing may be made from a material with a low coefficient of friction, e.g. nylon or the like. The bushing may sealingly engage the inner surface of the drill hole, e.g. to inhibit or prevent liquid from passing back along the drilling tube. The bushing may be resiliently compressible in the radial direction to facilitate sealing engagement.

The ring element may be detachably mounted on the drilling tube. Different sizes and/or materials for the ring elements may be used depending on the size of the drill head and the material of the workpiece, for example. The outer diameter of the ring element is preferably substantially equal to the effective drilling diameter of a drill head that is connected to the drilling tube. The ring element may have a tapered or rounded distal outer edge to facilitate location within the drill hole.

The coolant delivery system may operate to evacuate the chips by displacement, i.e. feeding a volume of coolant into the drill head region forces material (e.g. existing coolant and chips) away from the drill head region. The volumetric flow rate of the coolant supplied may be selected to ensure that the evacuated coolant and chips behave in a substantially fluid-like manner. By operating on the above displacement principle, there is no requirement to set up a pressure differential within the drilling tube in order to suck chips and coolant from the drill head region. Thus, the coolant delivery system of the invention may have no fluid communication between the first internal passage and the second internal passage within the drilling tube. An advantage of this approach is that evacuation operates effectively in longer holes, e.g. holes having an axial length equal to or greater than 5 times the drill hole diameter, preferably equal to or greater than 8 times the drill hole diameter. Conventional systems that rely on pressure differentials cannot typically sustain effective evacuation at such hole lengths.

The preferential coolant flow path preferably extends along an outer surface of the drill head and across a drilling interface at which the drill head operatively engages the workpiece. The coolant outlet may thus be located to release coolant at an outer side surface of the drill head.

The ring element is preferably mounted on an outer surface of the drilling tube, at a location that is proximal to the point at which coolant is introduced into the drill hole. The ring element may be sealingly mounted on the drilling tube, e.g. using a fluid tight connection, adhesive or the like in order to prevent coolant from escaping proximally through the joint between the ring element and drilling tube.

The coolant outlet may be dimensioned in any suitable manner that is capable of delivering coolant at the selected flow rate. It is desirable to avoid obstructing coolant flow in this region.

The drill head may have an exhaust passage extending axially within it, the exhaust passage having an inlet opening at the drilling interface.

The coolant delivery system may operate with any conventional coolant material, e.g. water, oil or a suitable emulsion of water and oil.

The coolant delivery system may be operable to deliver coolant at any suitable pressure, e.g. equal to or greater than 2 MPa. In particular, the coolant delivery system may be operate effectively using coolant supply pressures on conventional machining tools; there is no requirement for these tools to be adapted to be capable of delivering coolant at high pressures, e.g. 7 MPa or more.

The coolant delivery system may comprise an adaptor for connecting a proximal end of the drilling tube to a coolant supply. The adaptor may be a machined component, e.g. formed within a tool holder for a modular machining tool, or may be a cast component. The adaptor may be arranged to connect the coolant delivery system to a coolant supply on a conventional machining tool, which can enable the coolant delivery system disclosed herein to be retrofitted or mountable on existing machining platforms.

In one example, the adaptor may comprise a body having: an input bore connectable to the coolant supply; an output bore in fluid communication with the first internal passage; an exhaust chamber in fluid communication with the second internal passage; and a bypass channel connecting the input bore to the output bore around the exhaust chamber. The bypass channel thus acts to direct input coolant around the exhaust chamber.

The input bore may be in line with the drill axis. Similarly, the output bore may be in line with the drill axis. The coolant delivery system may thus be disposed along the drill axis of a machining tool, without requiring any off axis inputs. This arrangement may facilitate effective delivery of coolant, because the coolant flow path remains substantially aligned with the drill axis from its introduction to the first internal passage until it reaches the drill head.

The second internal passage may comprise a return conduit that passes through the output bore to reach the exhaust chamber. In other words, the return conduit may protrude into the adaptor to both deliver the coolant and chips to the exhaust chamber. The return conduit and exhaust chamber may define a volume that is sealed from the output bore in order to maintain a fluid tight separation between the first internal passage and the second internal passage.

The exhaust chamber may have a radially extending outlet through which returned coolant and chips are released. The outlet may act to funnel the returned coolant and chips in a particular direction to aid collection.

The first internal passage and the second internal passage may be enclosed volumes within the drilling tube. Each passage may be defined by a corresponding conduit. In one example, the drilling tube may comprise: an outer pipe in line with the drill axis, and an inner pipe mounted coaxially inside the outer pipe, wherein the first internal passage comprises an annular space between an outer surface of the inner pipe and an inner surface of the outer pipe, and wherein the second internal passage comprises an internal space of the inner pipe. The coaxial structure of the drilling tube may enable the coolant delivery system to be used with drill head intended for use with the ejector system discussed above.

The drilling tube may have a connection interface with the drill head that is similar to the ejector system. For example, the connection interface may be arranged to permit detachable fluid tight connection of a variety of drill heads. The connection interface may comprise a threaded inner surface on the drilling tube (e.g. on the outer pipe of the coaxial structure discussed above) that is arranged to sealing engage with a corresponding threaded outer surface on a proximal skirt of the drill head. In this arrangement, the coolant outlet may be located between an outer side surface of the drill head and a distal portion of an inner surface of the outer pipe. One or more through holes may be provided in the proximal skirt of the drill head to permit coolant to flow from the annular space between the outer surface of the inner pipe and the inner surface of the outer pipe to the outer side surface of the drill head.

The inner pipe may have an outward radial flare at the distal end of the drilling tube. The radial flare may guide fluid in the first internal passage towards the coolant outlet, e.g. towards the through holes discussed above. Where the drilling tube has a coaxial configuration, a distal edge of the radial flare may abut an inner surface of the drill head exhaust passage to provide a seal between the second internal passage and the first internal passage at a distal end of the drilling tube, the seal being located distally from the through holes mentioned above to ensure that the first internal passage and coolant outlet remain sealed from the second internal passage.

The coolant delivery system may be adapted for mounting on an automatic tool changer (ATC) mechanism of a machine tool. This can enable deep hole drilling functionality to be added to existing multi-functional machining tools.

In another aspect, the disclosure herein provides a deep hole drilling apparatus comprising: a drill head for forming a drill hole in a workpiece, the drill head and workpiece being rotatable relative to each other about a drill axis; and a coolant delivery system as described above, wherein the drill head is connected to the distal end of the drilling tube, and wherein the ring element has a diameter substantially equal to an effective cutting diameter of the drill head. As discussed above, the drill head may be detachably mounted on the distal end of the drilling tube via a fluid tight connection interface, or may be an integral part of the drilling tube. The deep hole drilling apparatus may form part of a machining tool, e.g. in which a workpiece is secured via a chuck to a drivable spindle, and where the drilling tube is supported by a suitable bushing over a platform to align the drill axis with the spindle axis. A feed mechanism causes relative axial movement between the workpiece and drilling tube over the platform in use. The deep hole drilling apparatus may comprise a coolant supply arranged to drive coolant displacement through the coolant delivery system without assistance from external pressure differential effects. As mentioned above, the coolant supply may have an operating pressure of less than 5 MPa, preferably equal to or less than 2 MPa (but greater than 1 MPa).

In another aspect, the disclosure herein provides a method of deep hole drilling comprising: driving relative rotational movement about a drill axis between a drill head and a workpiece to form a drill hole at a drilling interface within the workpiece; and supplying coolant to the drill head through a coolant delivery system device described above, wherein the coolant is supplied at a volumetric flow rate selected to carry chips formed at the drilling interface away from the drill head through the second internal passage. The drill hole may have an axial length equal to or greater than five times the effective cutting diameter of the drill head. The volumetric flow rate may be equal to or greater than 20 l/min, preferably equal to or greater than 40 l/min, and may be less than 100 l/min, or less than 60 l/min.

The method may include forming a pilot drill point in the workpiece before engaging the drill head with the workpiece. the pilot drill point may be a pilot hole in the workpiece along the drill axis, the pilot hole having a smaller diameter than a effective drilling diameter of the drill head.

### BRIEF DESCRIPTION OF THE DRAWINGS

Embodiments of the invention are discussed below with respect to the accompanying drawings, in which:
Fig. 1 is a schematic side view of a deep hole drilling apparatus that has a coolant delivery system that is an embodiment of the invention;
Fig. 2 is a schematic side view of the coolant delivery system used in the apparatus of Fig. 1;
Fig. 3 is a schematic cross-sectional view through the coolant delivery system of Fig. 2;
Fig. 4 is a front perspective view of a coolant delivery system that is an embodiment of the invention;
Fig. 5A is a close-up view of a junction between a drill head and the coolant delivery system of Fig. 4;
Fig. 5B is a perspective view of a distal end of a drill head connected to the coolant delivery system of Fig. 4;
Fig. 6 is a perspective view of the internal structure of an adaptor suitable for use in a coolant delivery system that is an embodiment of the invention; and
Fig. 7 is a flow chart of steps in a method of using a coolant delivery system that is an embodiment of the invention.

### DETAILED DESCRIPTION; FURTHER OPTIONS AND PREFERENCES

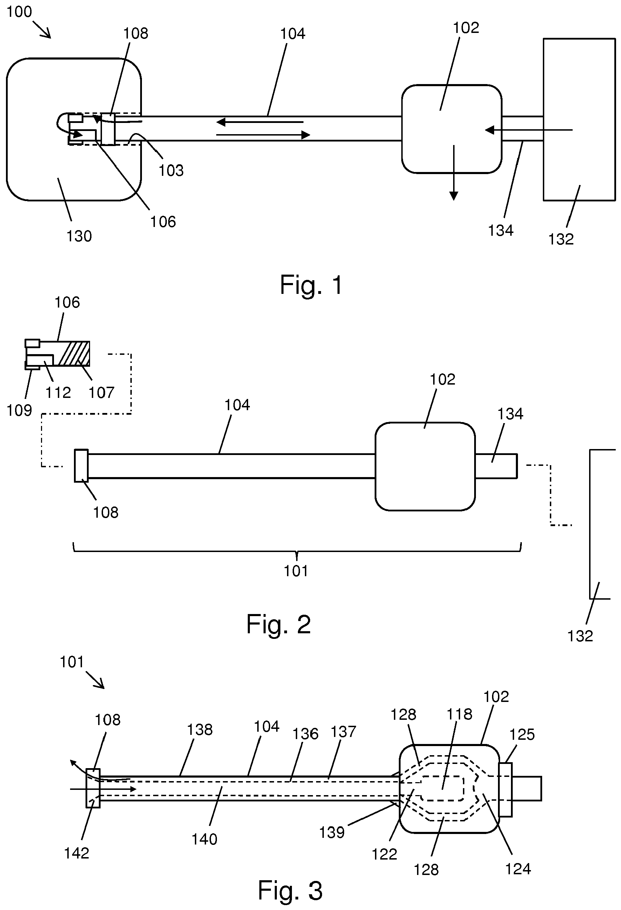

Fig. 1 shows a schematic side view of a deep hole drilling apparatus 100 that incorporates a coolant delivery system that is an embodiment of the invention. The apparatus may form part of a machining tool (not shown) that is arranged to cause relative rotation between a workpiece 130 and a drill head 106 about a drill axis, whilst also causing relative axial movement between the drill head 106 and workpiece 130 at a predetermined feed rate to cause the drill head 106 to create a hole 103 in the workpiece 130.

The drill head 106 is mounted at a distal end of a drilling tube 104, which has a length that enables holes with a depth greater than four times the diameter of the drill head to be formed in the workpiece.

In some embodiments, the workpiece 130 is mounted in a rotatable head (not shown) that is driven to rotate relative to the drill head 106. The drilling tube 104 may be axially drivable relative to the rotatable head to move the drill head into the workpiece. In other embodiment, the drill head may be driven to rotate relative to a static workpiece, or the workpiece and the drill head may be driven to rotate in opposite senses. Where the drill head (and drilling tube) are driven to rotate, the drilling tube can be connected to the adaptor via a bearing, similar to conventional coolant system connectors for rotating drills.

The apparatus 100 comprises a coolant delivery system that supplies coolant to the drill head 106. The flow of coolant at the drill head acts to both maintain a working temperature of the drill head (i.e. prevent overheating) and to remove chips that are generated as material is removed from the workpiece to form the hole 103. The coolant may be any suitable liquid. It may be oil or an emulsion of oil and water.

The coolant delivery system in this embodiment comprises an adapter 102, the drilling tube 104, which acts as a coolant conveying tube, and ring element 108 whose function is discussed below. The coolant delivery system is connected to receive coolant from a coolant supply unit 132, e.g. via an inlet supply pipe 134 at a proximal end of the adaptor 102. The adaptor 102 is preferably arranged to receive an input supply of coolant in a direction that is in line with or lies on the drill axis. This is advantageous because it enables the coolant delivery system to be used with conventional machining tools, and also can enable the coolant delivery system to be compatible with an automatic tool changing (ATC) mechanism, since the coolant input can be integrated with a conventional ATC coupling interface.

In the apparatus 100, the coolant delivery system operates on a positive displacement principle. That is, the coolant supply unit 132 is arranged to deliver coolant at a designated flow rate that is suitable to maintain a coolant flow path through the apparatus that flushes the chips away from the drilling interface.

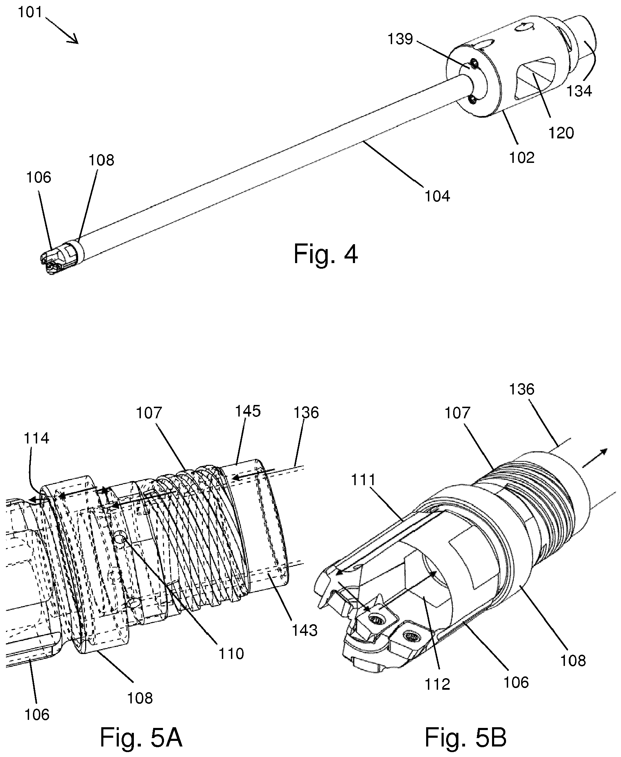

The coolant flow path includes a first internal passage in the drilling tube, which delivers coolant from the adaptor 102 to the drill head. The first internal passage has an outlet at a side surface of the drill head 106, which acts to introduce the coolant into the hole 103. The ring element 108 acts to block flow of the coolant in a proximal direction back out of the hole 103, thereby defining a preferential flow path around the front of the drill head 106 and back through an exhaust passage 112 (see e.g. Fig. 5B) formed in the drill head. The exhaust passage is connected to a second internal passage in the drilling tube 104, which carries the returned coolant and chips away from the drill head. The returned coolant and chips can be exhausted from the apparatus via a suitable outlet, e.g. in the adaptor 102 or elsewhere.

By using a positive displacement principle as a basis for evacuating chips from the drilling interface, the coolant delivery system of the invention can enable enhanced deep hole drilling functionality to be available on conventional machine tools. One reason for this is that the positive displacement principle works by selecting a coolant flow rate (in metres/minute or other suitable unit) that is in a range that does not require any adaptations to coolant supplies on such conventional machines (e.g. in terms of supply pressure or flow rate). The inventors have discovered that, taking into account parameters such as the drill head diameter, material of the workpiece, coolant type, and drill head feed rate, it is possible to select a coolant slow rate at conventional supply pressure (e.g. 2 MPa) that effectively flushes chips away from the drilling interface. Coolant flow rates between 20 l/min and 200 l/min can be used. An important distinction between the positive displacement principle of the invention and the ejector system discussed above, is that the second internal passage in the drilling tube 104 is sealed with respect to the first internal passage at a proximal end of the drilling tube. In the ejector system, it is essential for some communication to exist between the first and second passages in the drilling tube in order to create the pressure differential. However, the positive displacement technique disclosed herein does not require creation of such a pressure differential. A limitation of the ejector system is that the "pull" of the pressure differential has a limited effect, which in practice means that drills operating under the ejector system cannot drill to depths of more than 5m. Moreover, to establish a pressure differential that is capable of operating to such drill depths, it is necessary to use very high coolant flow rates, which are typically much higher than those available on non-specialist deep drilling machine centres.

The coolant delivery system according to embodiments disclosed herein does not suffer from this limitation. The positive displacement principle does not necessarily require increased fluid flow rates as the drill depth increases.

Fig. 2 shows a schematic side view of a coolant delivery system 101 that is an embodiment of the invention. In this embodiment, the coolant delivery system is an independent unit that can be mounted in a machine system. The coolant delivery system comprises an adaptor 102, a drilling tube 104 and a ring element 108 as discussed above. The coolant delivery system 101 is attachable via an input supply pipe 134 to a coolant supply 132, which may be part of a machining centre. A drill head 106 may be attached to a distal end of the drilling tube 104. The drill head 106 and second internal passage (i.e. return passage) in the drilling tube 104 may have cooperating attachment features to allow the drill head 106 to be attached to the drilling tube 104 in a manner that brings the exhaust passage 112 in the drill head 106 into fluid communication with the second internal passage of the drilling tube 104. For example, the proximal exterior surface of the drill head 106 may be provided with a threaded engagement feature 107 that can be secured in a fluid type manner to corresponding threaded features on the inside of the drilling tube 104.

The ring element 108 comprises a radial projection on a distal portion of the drilling tube 104. For example, the ring element can be a ring or bushing mounted at a junction between the drill head 106 and the drilling tube 104. The ring element may be secured to the drilling tube in a fixed manner, i.e. to prevent it from rotating relative to the drilling tube. For example, the ring element may be bonded in place using adhesive or physically fixed using bolts or the like. In other examples, the ring element may be rotatable relative to the drilling tube. The ring element 108 may be detachably mountable to the drilling tube via a suitable fitting. A resiliently deformable sealing member such as an O-ring (not shown) may be mounted between the ring element 108 and drilling tube to provide a fluid tight seal therebetween.

The ring element is dimensioned to fit within the hole 103 formed in the workpiece by the drill head 106. In other words, the ring element 108 may have a diameter that is the same as the effective drilling diameter of the drill head 106. The ring element may be made from a durable material such as nylon or aluminium that is capable of withstanding the relative movement between the workpiece and the ring element in use. The purpose of the ring element 108 is to block the escape of coolant in a proximal direction out of the hole 103. It may do this by sealingly engaging an inner surface of the hole 103 such that there is no space for coolant to escape. In this example, the ring element acts as a bushing. Whilst it is preferable for the ring element 108 to engage the inner surface of the hole 103, it is not necessary for it to form a fluid-tight seal in this rotation. The ring element 108 may define the preferential coolant flow path around the front of the drill head simply by inhibiting flow of the coolant in the proximal direction.

The coolant delivery system 101 may be suitable for use with conventional ejector system drill heads, since such drill heads already have an exhaust passage 112 located between suitable cutting elements 109 mounted on the front face of the drill head.

Fig. 3 shows a schematic cross-sectional view through one example of a coolant delivery system 101 described above. In this example, the drilling tube 104 comprises an inner pipe 136 that is mounted coaxially within an outer pipe 138. The inner pipe 136 has a smaller diameter than the outer pipe 138 to define an annular passage 137 that acts as the first internal passage for delivering coolant towards the drill head. An internal space 140 defined by the inner pipe 136 provides the second internal passage for conveying the returned coolant and chips. The internal pipe 136 protrudes distally beyond a distal end of the outer pipe 138. This protruding portion includes an outwardly flared part 142. The outwardly flared portion performs two functions. Firstly, its distal most edge is dimensioned to sealingly engage with an inner surface of a drill head that can be mounted on the drilling tube 104. The drill head may have a tubular proximal section for securably engaging with the drilling tube 104. An outer surface of this tubular section may be secured to an inner surface of the outer tube 138, while the inner tube 136 passes inside an inner surface of the tubular section. As explained below with respect to Fig. 5A, the tubular section of the drill head may contain one or more through holes 110 to permit coolant within the annular passage 137 to flow to an outer side surface of the drill head. A second function of the flared portion 142 may be to facilitate flow into the through holes 110.

The drilling tube 104 is coupled at its proximal end to the adaptor 102. The inner tube 136 protrudes proximally from the outer tube 138 and extends within a body of the adaptor 102. The adaptor has a hollow exhaust chamber 118 formed within it. The exhaust chamber 118 may open to the outside of the adapter to allow returned coolant and chips to be exhausted from the system. The internal space 140 of the inner pipe 136 is in fluid communication with the exhaust chamber 118 via an outlet passage 122 formed in the body of the adaptor 102. The inner pipe 136 is sealingly mounted within the outlet passage 122. The adaptor is also provided with fluid flow means for conveying coolant received (from the coolant supply 132) at an inlet passage 124 to the annular passage 137 formed between the inner pipe 136 and outer pipe 138. In this embodiment, this fluid conveying means comprises a pair of bypass channels 128. The bypass channels are formed within the body of the adaptor, as explained below. They are isolated from the exhaust chamber 118 and outlet passage 122. The bypass channels 128 terminate at an outer surface of the inner pipe 136 at a proximal end of the drilling tube 104 (which may be within the adaptor 102). The outer tube 138 is sealingly attached to the body of the adaptor 102 by a suitable sealing member 139, which may be a moulded skirt or the like.

Fig. 4 shows a perspective view of a coolant delivery system 101 similar to that discussed above. The coolant delivery system 101 comprises an adaptor 102 having a coaxial drilling tube 104 connected at a distal surface thereof, and lying along a drill axis. A drill head 106 is mounted a distal end of the drilling tube 104, and a ring element 108 is mounted a junction between the drill head 106 and the drilling tube 104. A coolant input tube 134 is provided at a proximal side of the adaptor to receive a coolant supply in line with the drill axis. The adaptor may also include a coupling for mounting the system to an ATC machine tool. In this example, a proximal end of the adaptor can be directly mounted on a machine spindle.

In this embodiment, the adaptor includes an exhaust passage 120 that allows returned coolant and chips to be expelled from the exhaust chamber.

Figs. 5A and 5B show a partly transparent view of an interface between the drill head 106 and drilling tube 104 and a distal end of the drill head 106 respectively.

Fig. 5A shows the route for the coolant flow path from the annular passage 137 between the inner pipe 136 and outer pipe 138 to the outer surface of the drill head 106. This flow path is similar to that provided in the conventional ejector system. The coolant flows into an annular passage 143 formed between the outer surface of the inner pipe 136 and an inner surface of a proximal skirt 145 of the drill head 106. The engagement feature 107 discussed above is formed on an outer surface of the proximal skirt 145 to sealingly engage an inner surface of the outer pipe 138 (which is omitted in Fig. 5A for clarity). One or more radial through holes 110 are provided in the proximal skirt 145 to permit the coolant to transit from the annular passage 143 to an outer surface of the proximal skirt 145. From there, the coolant exits the drilling tube 104 via a coolant outlet 114, which may be an annular gap formed between a radially innermost surface of the ring element 108 and the outer surface of the drill head 106.

Fig. 5B shows that the outer surface of the drill head 106 may be provided with one of more axially extended grooves 111 that promote flow of the coolant along the outer surface of the drill head to the drilling interface, where it acts to carry chips away from the drilling interface through the exhaust passage 112.

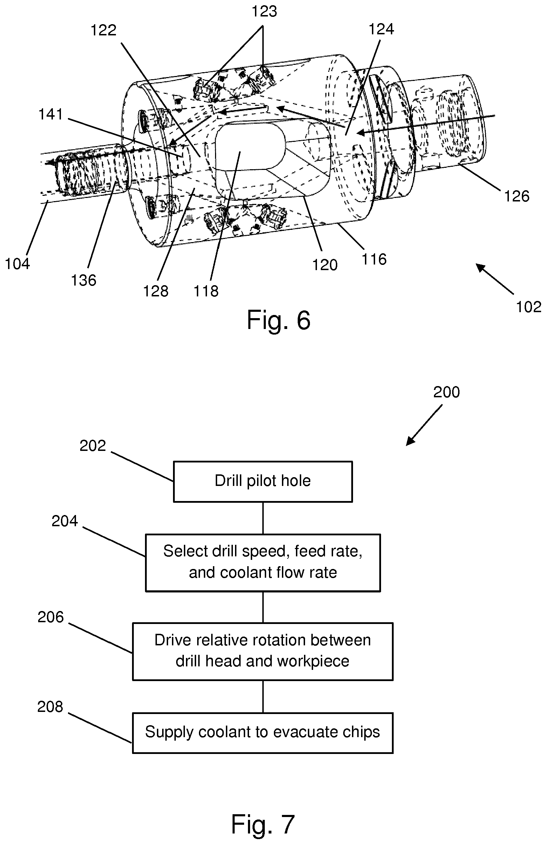

Fig. 6 shows a partially transparent view of an adaptor 102 that can be used with the coolant delivery system 101 discussed above. The adaptor comprises a body 116, which is a cylindrical element lying along the drill axis in this embodiment, but can in fact have any shape. In the embodiment shown in Fig. 6, the adaptor is created by modifying a tool holder blank, such as a blank associated with the Coromant Capto® modular tooling system.

The body 116 has a coolant input supply tube 126 attached to it. The coolant input supply tube 126 may be sized to mount the adaptor on a machining tool.

The body 116 of the adaptor is essentially a machined cylindrical blank. However, it need not be manufactured in this way; in other embodiments it may be a cast component or the like.

In order to form an escape route for the returned coolant ad chips, an exhaust chamber 118 is formed in the adaptor body 116 by machining a radially extending passage 120 into the centre of the body 116. An axially extending outlet passage 122 is machined from a distal surface of the body 116 into the exhaust chamber 118. The outlet passage lies along the drill axis. To provide flow paths for the coolant to be delivered around the exhaust chamber 118, an inlet supply passage 124 is machined into the proximal surface of the adaptor body 116 the input supply passage 124 does not connect into the exhaust chamber 118.

In order to allow the input coolant to pass around the exhaust chamber, two bypass channels 128 are machined into the adaptor body 116. Each bypass channel is formed from elements of three bores which are machined into the adaptor body 116. A first bore is machined from a distal portion of the side surface of the body 116 at an angle that ensures that it opens into the inlet passage 124 whilst avoiding the exhaust chamber 118. A second bore is machined from a proximal portion of the side surface of the body 116 at an angle that ensures that it opens into a distal portion of the outlet passage 122. Finally, a third bore is machined into a distal end surface of the adaptor body 116 in a direction whereby it intersects the first and second bores so as to provide fluid communication between them. In the example shown in Fig. 6, the third bore extends in the axle direction, i.e. parallel to (offset from) the drill axis.

After the three bores are machined for each bypass channel 128, sealing plugs 123 are secured in each of the bore entrances to prevent coolant from leaking out from the bypass channels in use.

As explained above, the inner pipe 136 of the drilling tube 104 extends into the outlet passage 122 so as to convey the returned coolant and chips into the exhaust chamber 118. The inner pipe 136 has a sealing element 141 at its proximal end, which provides a fluid tight seal within the outlet passage 122. The sealing element 141 is located proximally in the outlet passage 122 from the distal portion at which the second bore opens into the outlet passage 122. The sealing element 141 thus prevents incoming coolant from leaking into the exhaust chamber 118 as well as preventing outgoing coolant and chips from leaking into the bypass channel or annular passage.

### Test results

The underlying principle of the positive displacement technique discussed above is the ability to provide a volumetric flow rate of coolant through the system that is sufficient to carry the chips formed in the drilling process away from the drilling interface.

The precise coolant flow rate required in any given scenario is likely dependent on the nature of the chips, i.e. their shape and weight. It is likely that higher flow rates would be needed for scenarios in which either individual chips are heavy or in which the amount of material removed is high.

The shape and size of chips and/or the amount of material that is removed can be affected by drilling parameters such as drill speed and feed rate. Drill speed in this context means the speed of the outer surface of the drill head at the drilling interface, which is ***πnd***, where ***n*** is the rotation speed of the drill spindle and ***d*** is the diameter of the drill. Feed rate represents the axial speed at which the drill head and workpiece move relative to each other. Feed rate is often expressed as a feed per tooth (FPT), which provides a measure of how aggressive the feed is, with a high number corresponding to a more aggressive feed.

The positive displacement coolant delivery technique discussed above has been tested in a number of different scenarios. All tests were conducted on a XYZ XL1100 lathe in which the tool (drill head) was separated from the driving spindle by a length of 600 mm.

The XYZ XL1100 lathe includes a coolant supply system capable of delivering coolant at a rate of up to 200 l/min at a pressure of 2 MPa.

In a first series of tests, a workpiece of EN8 steel was machined with a drill head having an diameter of 50 mm, whilst varying other parameters as shown in Table 1. The coolant used in these tests was an emulsion.

**Table 1: Parameters for feed rate and flow rate tests**

| Run no. | Drill diameter (mm) | Drill speed (m/min) | Feed per tooth (mm) | Coolant flow rate (l/min) | Result |
|---|---|---|---|---|---|
| 1 | 50 | 80 | 0.2 | 42 | Pass |
| 2 | 50 | 80 | 0.1 | 42 | Pass |
| 3 | 50 | 50 | 0.2 | 42 | Pass |
| 4 | 50 | 80 | 0.2 | 20 | Pass |
| 5 | 50 | 80 | 0.2 | 15 | Fail |

When compared with test run 1, test run 2 shows that a lower feed rate still resulted in an acceptable result. When compared with test run 1, test run 3 shows that a lower drill speed still resulted in an acceptable result. When compared with test run 1, test runs 4 and 5 shows that there is a lower limit to the coolant flow rate that can yield an acceptable result. In this example, the lower limit is around 20 l/min. By way of comparison, an ejector system running using the same parameters as test run 1 ceases to function at coolant flow rates less than 60 l/min. This is due to the pressure differential weakening as the flow rate is reduced.

Successful tests were also run in a workpiece of EN8 steel for a drill diameter of 65 mm at a coolant flow rate of 100 l/min, for feeds (FPT) of 0.1 to 0.25 mm.

Successful tests were also run in a workpiece of EN8 steel for a drill diameter of 25.4 mm at a coolant flow rate of 42 l/min. This tests demonstrated that the technique is capable of use for drilling holes of up to 16D (i.e. sixteen times the drill diameter) for feeds (FPT) of 0.15 mm or more.

Successful tests were also run in a workpiece of cast iron for a drill diameter of 50 mm diameter at a coolant flow rate of 42 l/min, for feeds (FPT) of 0.1 and above.

Successful tests were also run in a workpiece of Inconel 718 for a drill diameter of 50 mm diameter at a coolant flow rate of 42 l/min, for feeds (FPT) of 0.2 and above.

Another technique to change the shape or size of removed chips is to perform a preliminary drilling operation to create a pilot drill point, e.g. a smaller diameter hole in the workpiece along which the drill head moves in the actually drilling operation.

Fig. 7 is a flow chart showing steps that may be involved in a drilling operation 200 that uses a coolant delivery system that is an embodiment of the invention. As mentioned above, the method may include a step 202 of drilling a pilot hole in the workpiece before the drill head engages the workpiece. The pilot hole may be drilled before or after the workpiece is mounted in a machining centre. This step may be optional. The method continues with a step 204 of selecting the parameters for the drilling operation. The parameters may include drill speed, feed rate and coolant flow rate. The particular parameters selected may depend on the material of the workpiece and the diameter of the drill. The parameters may be determined automatically (e.g. by a suitable software program) upon entry of input information relating to the workpiece and desired hole properties. The method continues with a step 206 of driving relative rotation between the drill head and the workpiece. This may involve driving rotation of either or both of the drill head and workpiece. As rotation occurs, the drill head and workpiece are moved axially relatively towards each other at the feed rate. During this process the method continues with a step 208 of supplying coolant through the coolant delivery system to evacuate chips from the drilling interface under the displacement principle discussed above.

## Claims

1. A coolant delivery system for a deep hole drilling machine, the coolant delivery system comprising:
a drilling tube lying on a drill axis and having a distal end connectable to a drill head, the drilling tube comprising:
a first internal passage for conveying coolant to the drill head; and
a second internal passage for conveying coolant and chips away from the drill head; and
**characterised in that**:
the drilling tube further comprises:
a ring element mounted at the distal end of the drilling tube and extending radially outward from the drill axis; and
a coolant outlet located on a distal side of the ring element, the coolant outlet being in fluid communication with the first internal passage to establish a coolant flow path around the drill head,
wherein the ring element is arranged to fit within a drill hole formed by the drill head to inhibit coolant from flowing back over an outer surface of the drilling tube, thereby to define a preferential coolant flow path towards the second internal passage.

2. A coolant delivery system according to claim 1, wherein the ring element comprises a bushing arranged to engage an inner surface of a drill hole formed by the drill head.

3. A coolant delivery system according to claim 1 or 2, wherein there is no fluid communication between the first internal passage and the second internal passage within the drilling tube.

4. A coolant delivery system according to any preceding claim including an adaptor for connecting a proximal end of the drilling tube to a coolant supply.

5. A coolant delivery system according to claim 4, wherein the adaptor comprises a body having:
an input bore connectable to the coolant supply;
an output bore in fluid communication with the first internal passage;
an exhaust chamber in fluid communication with the second internal passage; and
a bypass channel connecting the input bore to the output bore around the exhaust chamber.

6. A coolant delivery system according to claim 5, wherein the input bore is in line with the drill axis.

7. A coolant delivery system according to claim 5 or 6, wherein the second internal passage comprises a return conduit that passes through the output bore to reach the exhaust chamber, the return conduit and exhaust chamber defining a volume that is sealed from the output bore.

8. A coolant delivery system according to any preceding claim, wherein the drilling tube comprises:
an outer pipe in line with the drill axis, and
an inner pipe mounted coaxially inside the outer pipe,
wherein the first internal passage comprises an annular space between an outer surface of the inner pipe and an inner surface of the outer pipe, and
wherein the second internal passage comprises an internal space of the inner pipe.

9. A coolant delivery system according to any preceding claim adapted for mounting on an automatic tool changer (ATC) mechanism of a machine tool.

10. A deep hole drilling apparatus comprising:
a drill head for forming a drill hole in a workpiece, the drill head and workpiece being rotatable relative to each other about a drill axis; and
a coolant delivery system according to any preceding claim,
wherein the drill head is connected to the distal end of the drilling tube, and
wherein the ring element has a diameter substantially equal to an effective cutting diameter of the drill head.

11. A deep hole drilling apparatus according to claim 10 comprising a coolant supply arranged to drive coolant displacement through the coolant delivery system without assistance from external pressure differential effects.

12. A deep hole drilling apparatus according to claim 11, wherein the coolant supply has an operating pressure of less than 5 MPa, preferably equal to or less than 2 MPa (but greater than 1 MPa).

13. A method of deep hole drilling comprising:
driving relative rotational movement about a drill axis between a drill head and a workpiece to form a drill hole at a drilling interface within the workpiece; and
supplying coolant to the drill head through a coolant delivery system device according to any one of claims 1 to 9, wherein the coolant is supplied at a volumetric flow rate selected to carry chips formed at the drilling interface away from the drill head through the second internal passage.

14. A method according to claim 13, wherein the drill hole has an axial length equal to or greater than five times the effective cutting diameter of the drill head.

15. A method according to claim 13 or 14 including creating a pilot drill point in the workpiece before engaging the drill head with the workpiece.
